# EUROPEAN PATENT APPLICATION

(11) **EP 3 171 428 A1**
(43) Date of publication of application: **24.05.2017**
(21) Application number: 14894941.5
(22) Date of filing: 21.11.2014
(51) Int. Cl.: H01M 2/30, H01M 10/46

(54) **USB TERMINAL-EQUIPPED BATTERY**

(30) Priority: 20.06.2014 KR 20140075985
(71) Applicant: JNK Science Co., Ltd., Seoul 137-844 (KR)
(72) Inventor: JO, Kewm Yong, Seoul 137-829 (KR); KIM, Dae Hyeon, Bucheon-si Gyeonggi-do 420-030 (KR)
(74) Representative: Rückerl, Florian
(86) International application number: PCT/KR2014/011245
(87) International publication number: WO 2015/194714

(57) **Abstract**

The present invention relates to a Universal Serial Bus (USB) terminal-equipped battery, and more particularly, to a USB terminal-equipped battery including a USB female concave part such that the battery can be charged through a USB interface, and further including an additional variable cover such that a user can conveniently charge the battery even in different USB interface environments.

## Description

### [Technical Field]

The present invention relates to a Universal Serial Bus (USB) terminal-equipped battery, and more particularly, to a USB terminal-equipped battery including a USB female concave part such that the battery can be charged through a USB interface, and further including an additional variable cover such that a user can conveniently charge the battery even in different USB interface environments.

### [Background Art]

A battery is a portable energy source indispensable in everyday life, and the problem of waste batteries in Korea has been discussed in the document published by the Ministry of Environment on September 22, 2009 disclosing that 600 million or more primary batteries per year are used and disposed, and only approximately 6% batteries are recycled. A charging battery (a secondary battery) that enables a waste battery to be recycled is used as a means for solving the problem. In detail, a charging method, wherein an adapter is connected to a household outlet and a USB interface so that an exclusive charging battery can be inserted, is used in the conventional battery.

However, in the conventional battery, an exclusive charging adapter including a booster circuit has to be additionally provided in addition to a battery, and a charging method using a USB interface requires a configuration of only a USB male part or USB female part, and when a position of the USB interface is a position that a user cannot easily approach, there is a difficulty in using a USB cable. Also, the user separately has to provide a USB adapter suitable for the user so as to perform charging.

Prior Art Documents 1, 2, 3, and 4 disclose a mobile phone charging device using a battery and having a function of inserting the battery into a housing and charging an electronic device using a booster circuit.

Nevertheless, since the device for charging an electronic device using a battery disclosed in Prior Art Documents 1, 2, 3, and 4 includes the booster circuit, the battery can be charged. However, a charging operation has to be performed using an additional housing and an additional adapter separately.

### Prior Art Patent Documents

(Patent Document 1) Prior Art Document 1: Korean Patent Laid-open Publication No. 10-2006-0050085
(Patent Document 2) Prior Art Document 2: Korean Utility-model Registration No. 20-0431515
(Patent Document 3) Prior Art Document 3: Korean Utility-model Registration No. 20-0335683
(Patent Document 4) Prior Art Document 4: Korean Patent Laid-open Publication No. 10-2006-0050084

### [Disclosure]

### [Technical Problem]

The present invention is directed to providing a Universal Serial Bus (USB) terminal-equipped battery which can be connected to a USB interface so that the battery can be charged.

Furthermore, the present invention is also directed to providing a charging method, whereby both a USB male part and a USB female part can be used so as to enhance versatility.

Furthermore, the present invention is also directed to providing a variable cover that prevents foreign matter, such as dust, from penetrating into an opening of a USB female concave part.

### [Technical Solution]

One aspect of the present invention provides a Universal Serial Bus (USB) terminal-equipped battery including a body part and a variable cover, wherein the body part includes a USB female concave part, which is disposed at a side of the body part and into which a USB male part is inserted, and the variable cover includes a USB male protrusion and a cover body part, and a stepped concave part is formed at one end of the USB female concave part so as to accommodate the cover body part. In detail, the stepped concave part may include conductive protrusions through which the stepped concave part is electrically connected to the variable cover.

### [Advantageous Effects]

According to the present invention, since the USB terminal-equipped battery includes a USB female concave part disposed at a side of a body part, a battery can be charged using a USB interface including a USB male part.

Since the USB terminal-equipped battery further includes a variable cover, foreign substances can be prevented from being introduced into the USB female concave part.

Also, since the USB terminal-equipped battery provides a stepped concave part, when the variable cover is inserted into the stepped concave part, the variable cover can be fixed to the body part due to the stepped concave part.

Meanwhile, since the variable cover includes a USB male protrusion, the battery can be charged using a USB interface including a USB female part.

Meanwhile, a controller part and a memory part are provided in the battery so that data storing can be performed using the USB interface.

That is, as described above, since a USB interface including a USB male part and a USB female part can be used, a USB terminal-equipped battery in which a user can perform battery charging and data storing without an additional adapter, can be provided.

### [Description of Drawings]

FIG. 1 includes perspective views of a Universal Serial Bus (USB) terminal-equipped battery according to an embodiment of the present invention.
FIG 2 includes perspective views of the USB terminal-equipped battery according to an embodiment of the present invention, and the use of a USB interface using a USB male part.
FIG. 3 includes a view of the USB terminal-equipped battery according to an embodiment of the present invention and a cross-sectional view illustrating the use of a USB interface using a USB male part.
FIG. 4 includes a view of the USB terminal-equipped battery according to an embodiment of the present invention and a perspective view when a variable cover is inserted into a body part in a direction of a first face.
FIG. 5 includes a view of the USB terminal-equipped battery according to an embodiment of the present invention and a perspective view when a variable cover is inserted into a body part in a direction of a second face.
FIG. 6 includes a view of the USB terminal-equipped battery according to an embodiment of the present invention and a cross-sectional view when a variable cover is inserted.
FIG. 7 is a perspective view of a variable cover of the USB terminal-equipped battery according to an embodiment of the present invention.
FIG. 8 is a cross-sectional view of the variable cover of the USB terminal-equipped battery according to an embodiment of the present invention.

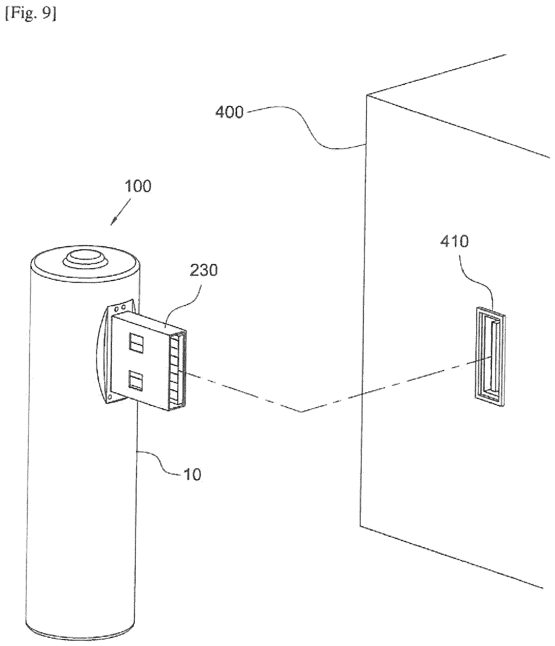

FIG 9 is a perspective view of an exemplary embodiment in which the USB terminal-equipped battery according to an embodiment of the present invention is charged through a USB interface.
FIG. 10 is a perspective view of another embodiment in which a body part of the USB terminal-equipped battery according to an embodiment of the present invention is applied to a rectangular battery.

### [Modes of the Invention]

Hereinafter, exemplary embodiments of the present invention will be described in detail with reference to the attached drawings. In this procedure, sizes or shapes of elements shown in the drawings may be exaggerated for clarity and convenience of explanation. Also, terms that are particularly defined in consideration of the configuration and operation of the present invention may be changed according to a user or operator's intention or practice. Therefore, definitions of the terms should be made based on the contents of the present specification. The spirit of the present invention is not limited to the suggested embodiments, and those skilled in the art who understand the spirit of the present invention can easily embody another embodiment within the scope of the same spirit and this also belongs to the scope of the present invention.

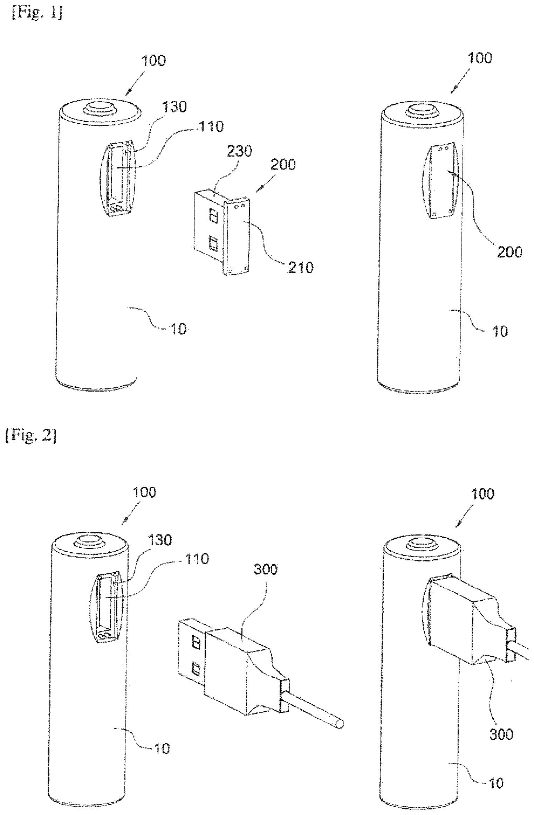

FIG. 1 includes perspective views of a Universal Serial Bus (USB) terminal-equipped battery according to an embodiment of the present invention. Hereinafter, a description will be based on FIG. 1, and a configuration that is not shown in FIG. 1 is separately indicated in reference drawings.

The USB terminal-equipped battery according to an embodiment of the present invention may be a cylindrical AA size battery but is not limited thereto. The USB terminal-equipped battery is applied to batteries having various sizes, such as CR123A, AAA, AA, C, D, FC-1, 4FM, etc.

The USB terminal-equipped battery according to an embodiment of the present invention may be a Type A USB connector and port but is not limited thereto. The USB terminal-equipped battery is applied to various connectors and ports, such as Type A, Type B, Mini-A, Mini-B, Micro-A, Micro-B, etc.

A USB terminal-equipped battery 100 according to an embodiment of the present invention includes a body part 10 and a variable cover 200.

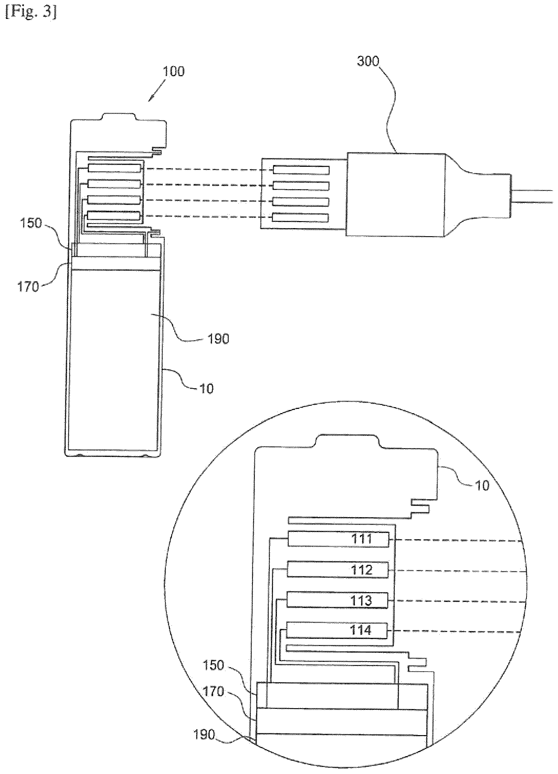

A positive (+) pole is formed on a top surface of the body part 10, and a negative (-) pole is formed on a bottom surface thereof. As illustrated in FIG. 3, a condenser part 190, a controller part 150, and a memory part 170 are provided in the body part 10.

A lead-acid battery, a nickel cadmium battery, a nickel-hydride battery, a lithium ion battery, a lithium polymer battery, or a fuel cell may be used as the condenser part 190 that is a secondary battery condenser part. The condenser part 190 is not limited to the secondary battery condenser part 190 but may be a primary battery condenser part.

The configuration and connection relationship of the controller part 150 and the memory part 170 are the same as those of well-known technology and thus, a detailed description thereof will be omitted from the present specification.

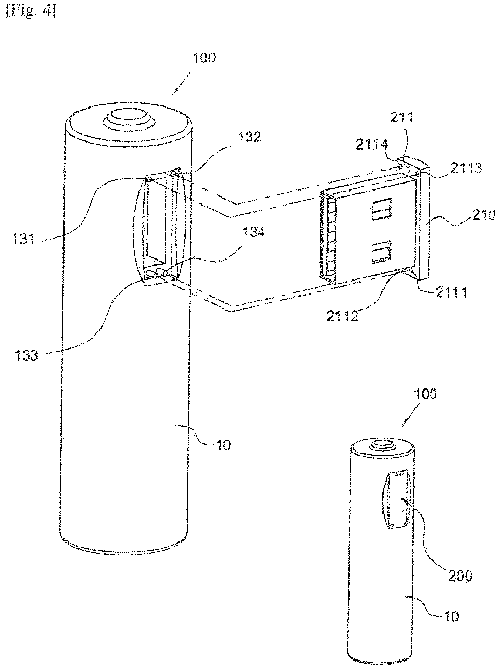

Referring to FIGS. 1 and 2, the body part 10 includes a USB female concave part 110 having a side into which a USB male part 300 is capable of being inserted. In detail, the USB female concave part 110 has a groove having the same size as that of the USB male part 300 into which the USB male part 300 is capable of being inserted. The USB female concave part 110 is configured to be electrically connected to the USB male part 300. Additionally, referring to FIGS. 4, 5, and 7, the USB female concave part 110 has terminals formed on a ground surface into which the USB male part 300 is inserted, and the terminals 111, 112, 113, and 114 are electrically connected to the condenser part 190 and the controller part 150 provided in the body part. In detail, the USB female concave part 110 has terminals formed on a ground surface that contacts the USB male part 300, and the terminals include a concave part + terminal 112 and a concave part terminal 113 for charging and a concave part VCC terminal 111 and a concave part GND terminal 114 for data storing. As illustrated in FIG. 3, the concave part VCC terminal 111 and the concave part GND terminal 114 are electrically connected to the memory part 170 through the controller part 150, and the concave part + terminal 112 and the concave part terminal 113 are electrically connected to the condenser part 190.

That is, when the USB male part 300 is inserted into the USB female concave part 110, terminals of the USB male part 300 are electrically connected to the condenser part 190 and the controller part 150 through the terminals 111, 112, 113, and 114 provided in the USB female concave part 110 so as to perform battery charging and data storing.

Referring to FIGS. 1, 4, and 5, a groove may be formed in one end of the USB female concave part 110 so that a cover body part 210 that will be described below may be inserted into the groove. In detail, a stepped concave part 130 formed to have a step height with the USB female concave part 110 may be provided in one end of the body part 10 of the USB female concave part 110 in a lateral direction so that the cover body part 210 may be inserted into the stepped concave part 130. In more detail, a first face 211 and a second face 213 of the cover body part 210 that will be described below protrude as an arc having the same size as that of a diameter of the body part 10, and the stepped concave part 130 is formed as a groove having the same shape as that of the first face 211 and the second face 213 so that the first face 211 or the second face 213 is inserted into the stepped concave part 130.

That is, when the cover body part 210 is inserted into the stepped concave part 130 provided in the USB female concave part 110, a circumferential surface of the cover body part 210 is the same as a circumferential surface of the body part 10. Thus, when the cover body part 210 is inserted into the stepped concave part 130, a jaw does not protrude from an outer side of the cover body part 210 so that even when either one of the first face 211 and the second face 213 is inserted into the stepped concave part 130, the surface of the cover body part 210 and the surface of the stepped concave part 130 having the same shape may be maintained (see FIG. 1).

Also, a fingernail-shaped groove may be formed in one end of the body part 10 of the USB female concave part 110 in a direction of an outer side of the body part 10 so that the variable cover 200 that will be described below may be more easily dismantled from the body part 10.

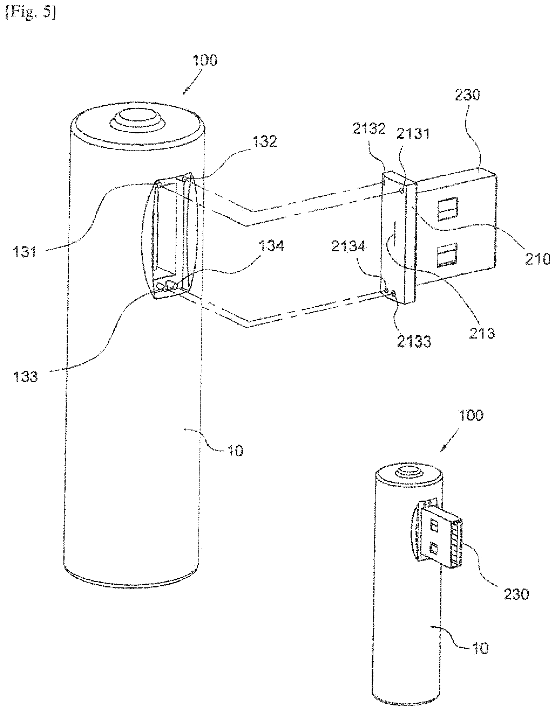

Referring to FIGS. 4 and 5, the USB terminal-equipped battery 100 according to an embodiment of the present invention includes one or more conductive protrusions 131, 132, 133, and 134 (or conductive protrusions 1300) formed on the stepped concave part 130, and the conductive protrusions 1300 are formed on a surface of the stepped concave part 130 and protrude outward from the body part 10. In detail, the conductive protrusions 131, 132, 133, and 134 include two data conductive protrusions 131 and 134 and two power conductive protrusions 132 and 133. Two pairs of conductive protrusions 1300 are formed in a positive pole direction of the body part 10 and a negative pole direction of the body part 10, respectively. In more detail, the conductive protrusions 131 and 132 in the positive pole direction are spaced apart from each other, and the conductive protrusions 133 and 134 in the negative pole direction are adjacent to each other. In further detail, a left side of the conductive protrusions 131 and 132 in the positive pole direction of the body part 10 is a VCC conductive protrusion 131, a right side thereof is a positive (+) conductive protrusion 132, a left side of the conductive protrusions 133 and 134 in the negative pole direction of the body part is a negative (-) conductive protrusion 133, and a right side thereof is a GND conductive protrusion 134. The VCC conductive protrusion 131 and the GND conductive protrusion 134 are electrically connected to the memory part 170 through the controller part 150 in the body part 10, and the positive (+) conductive protrusion 132 and the negative (-) conductive protrusion 133 are electrically connected to the condenser part 190 in the body part 10.

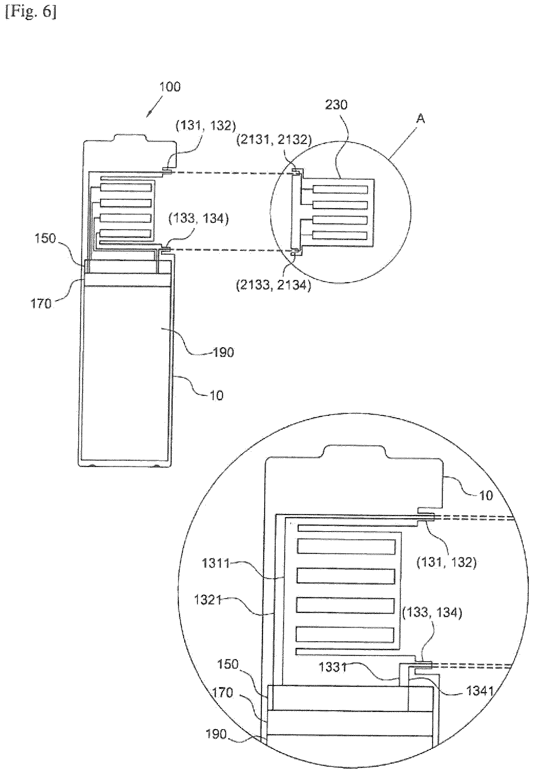

That is, referring to FIGS. 3 and 6, the conductive protrusions 1300 include the VCC conductive protrusion 131, the GND conductive protrusion 134, the positive (+) conductive protrusion 132, and the negative (-) conductive protrusion 133 and are connected to the condenser part 190 and the controller part 150 provided in the body part 10.

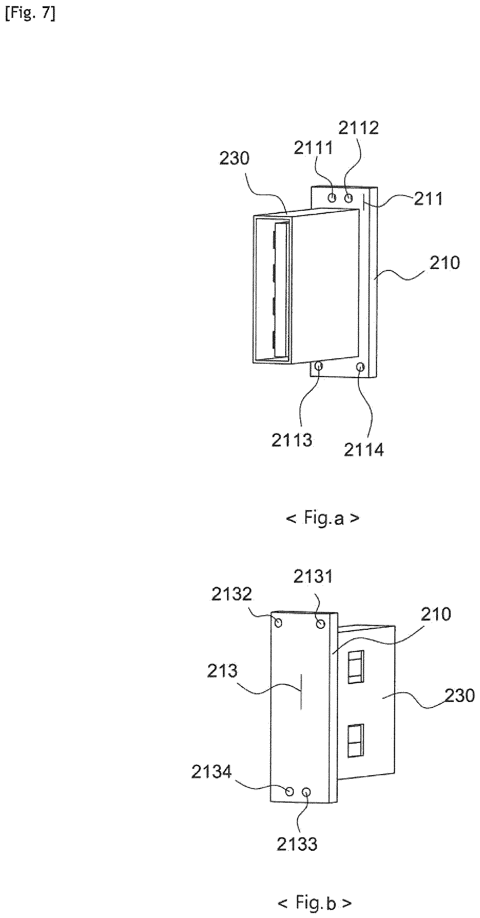

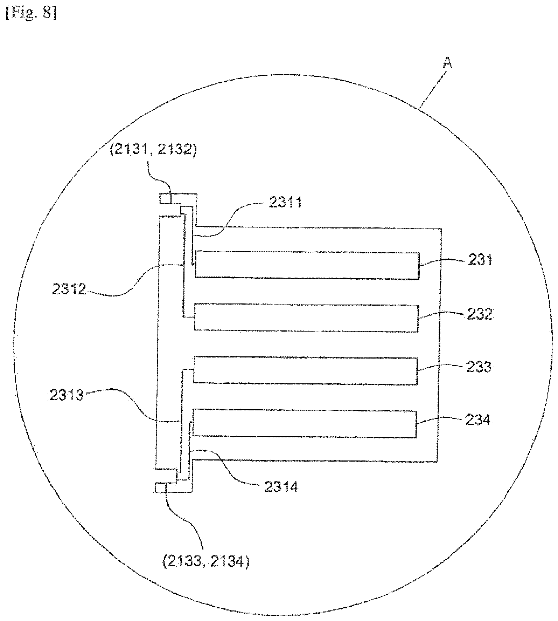

Referring to FIGS. 7 and 8, in an embodiment of the present invention, the variable cover 200 includes the cover body part 210 and a USB male protrusion 230. In detail, the USB male protrusion 230 has the same shape as that of the USB female concave part 110, and terminals are provided on a ground surface that contacts a USB female part 410 so that the USB male protrusion 230 is inserted into a USB interface 400 having the same shape as that of the USB female part 410 and the terminals are connected to the USB female part 410. In detail, the USB male protrusion 230 is provided on the first face 211 of the cover body part 210, and the terminals of the USB male protrusion 230 include a USB positive (+) terminal 232 and a USB terminal 233 so that charging can be performed when the terminals of the USB male protrusion 230 are connected to the USB female part 410, and a USB VCC terminal 231 and a USB GND terminal 234 for data storing. Referring to FIG. 4, one or more fixing openings 2110 are provided in the first face 211 of the cover body part 210. In detail, the one or more fixing openings 2110 are provided in corresponding positions in which, when the variable cover 200 is inserted into the USB female concave part 110 of the body part 10 in a direction of the first face 211, the conductive protrusions 1300 formed on the stepped concave part 13 can be inserted into the one or more fixing openings 2110. In more detail, the fixing openings 2110 are provided in positions corresponding to the conductive protrusions 1300 and enable the variable cover 200 to be fixed to the body part 10 so as not to escape from the body part 10 when the variable cover 200 is inserted into the USB female concave part 110 of the body part 10 in the direction of the first face 211. The term "corresponding" refers to the same positions which are provided in the same direction and in which coupling can be performed. Additionally, the fixing openings 2110 may be insulated so that no electricity flows through the fixing openings 2110.

Referring to FIGS. 5 and 6, one or more conductive openings 2130 are provided on the second face 213 of the cover body part 210 so that the conductive protrusions 3100 may be inserted into the one or more conductive openings 2130. In detail, the one or more conductive openings 2130 are provided in corresponding positions so that, when the cover body part 210 is fastened to the body part 10 in the direction of the second face 213, the conductive protrusions 131, 132, 133, and 134 provided in the stepped concave part 130 can be inserted into the conductive openings 2130 provided in the cover body part 210. In more detail, the one or more conductive openings 2130 include a VCC conductive opening 2131, a GND conductive opening 2134, a positive (+) conductive opening 2132, and a conductive opening 2133. In further detail, the VCC conductive opening 2131 is provided in a position corresponding to the VCC conductive protrusion 131, the GND conductive opening 2134 is provided in a position corresponding to the GND conductive protrusion 134, the positive (+) conductive opening 2132 is provided in a position corresponding to the positive (+) conductive protrusion 132, and the conductive opening 2133 is provided in a position corresponding to the conductive protrusion 133. The term "corresponding" refers to the same positions which are provided in the same direction and in which coupling can be performed.

Referring to FIG. 7, the fixing openings 2110 provided in the first face 211 and the conductive openings 2130 provided in the second face 213 may be provided in reverse positions so that opened grooves of the fixing openings 2110 and the conductive openings 2130 do not overlap and thus do not interfere with one another.

Referring to FIGS. 5 and 6, the conductive openings 2130 provided in the second face 213 are electrically connected to terminals 2300 provided in the USB male protrusion 230. In detail, the terminals include a USB VCC terminal 231, a USB GND terminal 234, a USB positive (+) terminal 232, and a USB terminal 233. In more detail, the USB VCC terminal 231 is electrically connected to the VCC conductive opening 2131, the USB GND terminal 234 is electrically connected to the GND conductive opening 2134, the USB positive (+) terminal 232 is electrically connected to the positive (+) conductive opening 2132, and the USB terminal 233 is electrically connected to the conductive opening 2133.

That is, when the variable cover 200 is inserted into the body part 10 in the direction of the first face 211, the variable cover 200 is used to prevent foreign matter from being introduced into the USB female concave part 110 (see FIG. 1).

When the variable cover 200 is removed from the body part 10, battery charging and data storing can be performed using the USB interface 400 to which the USB male part 300 is applied (see FIG. 2).

Also, when the variable cover 200 is inserted into the body part 10 in the direction of the second face 213, battery charging and data storing can be performed using the USB interface 400 to which the USB female part 410 is applied, so that a user can use the variable cover 200 regardless of the shape of terminals of the USB interface 400 (see FIG. 5).

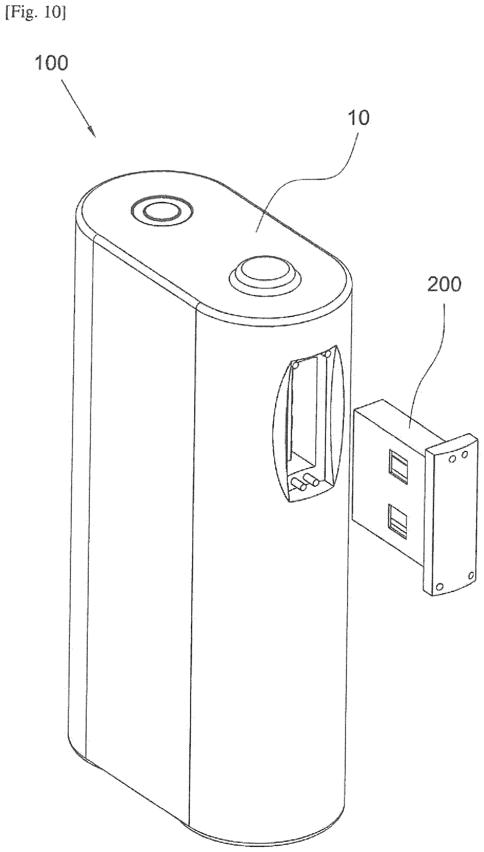

Referring to FIG. 10, a USB terminal-equipped battery according to another embodiment of the present invention applied to an FC-1 type battery having a voltage of 9V may be an AA type battery and an FC-1 type battery, but is not limited thereto and may be applied to batteries having various types of shapes and voltages.

While the invention has been shown and described with reference to certain exemplary embodiments thereof, it will be understood by those skilled in the art that various changes in form and details may be made therein without departing from the spirit and scope of the invention as defined by the appended claims.

**Explanation of reference numerals**

| | |
|---|---|
| 100: USB terminal-equipped battery | 10: body part |
| 110: USB female concave part | 111: concave part VCC terminal |
| 112: concave part positive (+) terminal | 113: concave part terminal |
| 114: concave part GND terminal | 130: stepped concave part |
| 1300: conductive protrusion | |
| 131: VCC conductive protrusion | 132: positive (+) conductive protrusion |
| 133: negative (-) conductive protrusion | 134: GND conductive protrusion |
| 150: controller part | 170: memory part |
| 190: condenser part | 200: variable cover |
| 210: cover body part | 211: first face |
| 2110: fixing opening | |
| 213: second face | 230: USB male protrusion |
| 2130: conductive opening | |
| 2131: VCC conductive opening | 2132: positive (+) conductive opening |
| 2133: negative (-) conductive opening | 2134: GND conductive opening |
| 2300: USB male protrusion terminal | |
| 231: USB VCC terminal | 232: USB positive (+) terminal |
| 233: USB terminal | 234: USB GND terminal |
| 300: USB male part | 400: USB interface |
| 410: USB female part | |

### [Industrial Applicability]

According to the present invention, since a Universal Serial Bus (USB) terminal-equipped battery includes a USB female concave part at a side of a body part so that a battery can be charged using a USB interface including a USB male part, and further includes a variable cover so that foreign matter can be prevented from being introduced into the USB female concave part. Also, a stepped concave part is provided so that, when the variable cover is inserted, the variable cover can be stably fixed to the body part due to the stepped concave part.

Thus, according to the present invention, a battery that is portable, is provided with USB terminals and is capable of being selectively connected to a USB female part or a USB male part through the variable cover, can be provided.

## Claims

1. A Universal Serial Bus (USB)-terminal equipped battery (100) charged through a USB interface, comprising:
a USB female concave part (110) into which a USB male part is inserted; and
a stepped concave part (130) formed at one end of the USB female concave part (110) to have a step height with the USB female concave part (110).

2. The USB-terminal equipped battery of claim 1, wherein the stepped concave part (130) includes one or more conductive protrusions (1300) formed at one end of the stepped concave part (130) and protruding outward.

3. The USB-terminal equipped battery of claim 2, further comprising a variable cover (200),
wherein the variable cover (200) comprises:
a cover body part (210) inserted into the stepped concave part (130); and
a USB male protrusion (230) inserted into the USB female concave part (110) and formed at a first face (211) of the cover body part (210).

4. The USB-terminal equipped battery of claim 3, wherein one or more fixing openings (2110) into which the one or more conductive protrusions (1300) are inserted, are provided in the first face (211) of the cover body part (210).

5. The USB-terminal equipped battery of claim 4, wherein the one or more fixing openings (2110) are insulated.

6. The USB-terminal equipped battery of claim 3, wherein one or more conductive openings (2130) into which the one or more conductive protrusions (1300) are inserted, are provided in a second face (213) of the cover body part (210).

7. The USB-terminal equipped battery of claim 6, wherein the conductive openings (2130) provided in the second face (213) of the cover body part (210) are electrically connected to terminals (2300) of the USB male protrusion (230) of the variable cover (200).

8. The USB-terminal equipped battery of claim 6, wherein the conductive openings (2130) provided in the second face (213) of the cover body part (210) are electrically connected to terminals (2300) of the USB male protrusion (230) of the variable cover (200).

9. The USB-terminal equipped battery of claim 2, wherein one end of the one or more conductive protrusions (1300) is electrically connected to a memory part (150) provided in the battery through a controller part.

10. The USB-terminal equipped battery of claim 2, wherein power is supplied to a condenser part (190) provided in the battery through one end of the one or more conductive protrusions (1300).
